# EUROPÄISCHE PATENTSCHRIFT

(11) **EP 3 743 240 B1**
(45) Veröffentlichungstag und Bekanntmachung des Hinweises auf die Patenterteilung: **29.06.2022**
(21) Anmeldenummer: 19712546.1
(22) Anmeldetag: 14.03.2019
(51) Int. Cl.: B23P 19/00, B25B 23/06, B21J 15/32

(54) **VORRICHTUNG ZUM ABBREMSEN UND HALTEN EINES VERARBEITUNGSELEMENTS**
DEVICE FOR BRAKING AND HOLDING A PROCESSING ELEMENT
DISPOSITIF POUR FREINER ET TENIR UN ÉLÉMENT DE TRAITEMENT

(30) Priorität: 16.03.2018 DE 102018106193
(43) Veröffentlichungstag der Anmeldung: 02.12.2020
(73) Patentinhaber: Weber Schraubautomaten GmbH, 82515 Wolfratshausen (DE)
(72) Erfinder: WIETHOFF, Ralf, 82362 Weilheim (DE); HARTMANN, Jochen, 83646 Bad Tölz (DE); WAGENSTALLER, Wolfgang, 82515 Wolfratshausen (DE)
(74) Vertreter: Manitz Finsterwald Patent- und Rechtsanwaltspartnerschaft mbB
(86) Internationale Anmeldenummer: PCT/EP2019/056440
(87) Internationale Veröffentlichungsnummer: WO 2019/175321

(56) Entgegenhaltungen:
- EP-A1- 2 329 898
- DE-A1-102008 018 428
- DE-A1-102008 051 488
- DE-A1-102010 048 776
- DE-A1-102015 116 214
- JP-A- 2008 213 032

## Beschreibung

Die vorliegende Erfindung betrifft eine Vorrichtung zum Abbremsen und Halten eines einen Kopf aufweisenden Verarbeitungselements, z.B. einer Schraube, eines Nagels oder eines Niets, welches einem Werkzeug automatisch zugeführt wird.

Eine derartige Vorrichtung ist grundsätzlich bekannt und wird beispielsweise in einem Schraubsystem mit automatischer Schraubenzuführung eingesetzt, um eine z.B. mittels Druckluft zugeführte Schraube zu stoppen, bevor sie mit dem Schraubwerkzeug in Eingriff gebracht wird.

Bei einfachen Vorrichtungen erfolgt das Stoppen der zugeführten Schraube mittels eines starren Metallschiebers, welcher in einen Führungskanal geschoben wird, um diesen vollständig zu versperren. Problematisch ist hierbei, dass die Spitze der Schraube beim Aufprall auf den Metallschieber beschädigt werden kann. Außerdem können sich beim Aufprall der Schraube auf den Metallschieber Partikel oder Späne von der Schraube oder dem Metallschieber lösen, welche anschließend zu der Verschraubungsstelle mittransportiert werden, was insbesondere unerwünscht ist, wenn erhöhte Anforderungen an die Reinheit der Arbeitsbedingungen gestellt werden.

Eine andere bekannte Vorrichtung sieht daher eine Bürste mit einer Vielzahl von elastisch verformbaren Borsten als Bremselement vor. Hierdurch kann die Schraube schonend gebremst werden.

Eine solche Vorrichtung ist aus der DE 10 2015 116214 A1, die die Merkmale des Oberbegriffes des Anspruchs 1 offenbart, bekannt geworden.

Allerdings kann diese Vorrichtung bei hohen Beschleunigungen der Vorrichtung den Nachteil haben, dass die Schraube nicht ausreichend durch die Bürste fixiert ist. Hohe Beschleunigungen sind vor allem dann zu erwarten, wenn die Vorrichtung an einem Roboterarm montiert ist und sich im Betrieb schnell und/oder über Kopf bewegt. Bei diesen Anwendungen besteht die Gefahr, dass die Haltekraft der Bürsten überwunden wird und sich die Schraube ungewollt entgegen ihrer vorgesehenen Transportrichtung in den vorgelagerten Führungskanal zurückbewegt. Es ist eine Aufgabe der vorliegenden Erfindung, die zuvor beschriebenen Nachteile des Standes der Technik zu überwinden und eine Vorrichtung bereitzustellen, welche die Schraube schonend bremst und dabei sicherstellt, dass die Schraube auch bei hohen Beschleunigungen der Vorrichtung sicher gehalten wird.

Die Aufgabe wird durch eine Vorrichtung mit den Merkmalen des Anspruchs 1 gelöst. Erfindungsgemäß ist ein zwischen einer Bremsposition und einer Freigabeposition beweglich gelagertes Bremselement vorgesehen , welches zum Abbremsen und Halten des zugeführten Verarbeitungselements zumindest teilweise in den Führungskanal einbringbar ist, und welches einen in der Bremsposition in den Führungskanal hineinragenden und den Führungskanal dadurch verengenden Teil umfasst. Dieser in der Bremsposition in den Führungskanal hineinragende Teil des Bremselements weist eine dem Führungskanal zugewandte Stirnseite auf, die eine Rastvertiefung zum Halten des Kopfes des Verarbeitungselements ausbildet.

Durch die Rastvertiefung wird der Kopf des Verarbeitungselements, z.B. der Schraube, sicher in der Vorrichtung gehalten, ohne dass die Spitze oder ein anderer der Spitze entsprechender Teil des Verarbeitungselements beim Bremsen des Verarbeitungselements in Mitleidenschaft gezogen wird. Eine Grundidee der Erfindung besteht somit darin, dass das Verarbeitungselement, insbesondere ausschließlich, am Kopf abgebremst und gehalten wird und dadurch beispielsweise die Spitze und der Schaft einer Schraube beim Bremsen nicht belastet werden. Zudem wird der Kopf des Verarbeitungselements mittels eines Formschlusses fixiert, sodass sich der Kopf weder in einer Transportrichtung des Verarbeitungselements in dem Führungskanal, noch entgegen der Transportrichtung des Verarbeitungselements aus seinem Fixierbereich herausbewegen kann. Als Formschluss wird hierbei die Lage zweier Bauteile zueinander angesehen, bei der eines der Bauteile dem anderen den Weg in der betrachteten Bewegungsrichtung versperrt. Anders ausgedrückt ist bei einer formschlüssigen Verbindung der eine Verbindungspartner dem anderen im Weg. Formschluss ist dagegen nicht gegeben, wenn die Verbindung ausschließlich auf einer Reibkraft basiert.

Vorteilhafte Ausbildungen der Erfindung sind den Unteransprüchen, der Beschreibung und den Zeichnungen zu entnehmen.

Bevorzugt ist die Vorrichtung derart ausgebildet, dass sie das Verarbeitungselement ausschließlich am Kopf abbremst. In anderen Worten ist die Vorrichtung so gestaltet, dass die von der Vorrichtung auf das Verarbeitungselement übertragene Bremskraft ausschließlich, d.h. nur, am Kopf des Verarbeitungselements wirkt. Hierdurch wird verhindert, dass beispielsweise eine Spitze oder ein Schaft des Verarbeitungselements durch eine auf sie wirkende Bremskraft beschädigt werden.

Gemäß einer Ausführungsform ist das Bremselement derart ausgebildet und angeordnet, dass es den Kopf eines gehaltenen Verarbeitungselements in der Bremsposition mit einer quer zu einer Haupterstreckungsrichtung des Führungskanals gerichteten Klemmkraft beaufschlagt. Der Kopf des Verarbeitungselements wird somit nicht nur formschlüssig in der Rastvertiefung gehalten, sondern zusätzlich noch geklemmt, beispielsweise zwischen der Rastvertiefung und einer Innenseite des Führungskanals und somit mittels Kraftschluss gehalten. Eine solche Vorrichtung ist einfacher zu konstruieren als eine Vorrichtung, welche passgenau den Kopf des Verbindungselements hält, und dazu geeignet, Fertigungstoleranzen beim Durchmesser des Kopfes des Verarbeitungselements auszugleichen oder gar für verschieden große Verarbeitungselemente genutzt zu werden.

Das Bremselement und/oder die Innenseite des Führungskanals kann bzw. können aus einem unelastischen Material bestehen, d.h. einem Material, welches sich bei einem Halten bzw. Klemmen des Verarbeitungselements - im Gegensatz zu aus dem Stand der Technik bekannten Bürsten - nur unwesentlich verformt.

Vorteilhafterweise ist die Form der Stirnseite des Bremselements an die Form der Innenseite des Führungskanals angepasst. Beispielsweise kann die Innenseite des Führungskanals gerade ausgebildet sein und die Stirnseite des Bremselements entsprechend ebenfalls gerade ausgebildet sein. Die Innenseite des Führungskanals kann alternativ gekrümmt ausgebildet sein, sodass folglich der Führungskanal gekrümmt ist. Die Stirnseite des Bremselements kann in diesem Fall in dieselbe Richtung gekrümmt sein, sodass die Innenseite des Führungskanals und die Stirnseite des Bremselements im Wesentlichen parallele Kurven zueinander bilden, wenn sich das Bremselement in der Freigabeposition befindet. Hierdurch entsteht ein Führungskanal, der im Wesentlichen eine konstante Breite, insbesondere einen konstanten Durchmesser, aufweist.

Vorteilhafterweise weist die Vorrichtung eine Vorspanneinrichtung auf, welche das Bremselement entgegen einer Bewegung in die Freigabeposition vorspannt. Mit anderen Worten spannt die Vorspanneinrichtung das Bremselement in Richtung der Bremsposition vor. So kann sichergestellt werden, dass das Bremselement bei einer Unterbrechung der Energiezufuhr zu der Vorrichtung ein in der Halteposition befindliches Verarbeitungselement zuverlässig festhält. Zudem wird keine Energie verbraucht, während das Verarbeitungselement von dem Bremselement festgehalten wird.

Das Bremselement kann eine der Rastvertiefung in einer Transportrichtung des Verarbeitungselements vorgelagerte Anlauffläche aufweisen, durch die der Führungskanal, wenn sich das Bremselement in der Bremsposition befindet, verengt wird. Die Anlauffläche steht, wenn sich das Bremselement in der Bremsposition befindet, bevorzugt in einem flachen Winkel zu einer Mittelachse des Führungskanals. Der Winkel kann beispielsweise in einem Bereich zwischen 3° und 30° liegen. Insbesondere liegt der Winkel in einem Bereich zwischen 5° und 20°.

Vorzugsweise ist die auf das Bremselement wirkende Vorspannkraft so dimensioniert, dass durch ein Auftreffen auf und Entlanggleiten des Kopfes des Verarbeitungselements an der Anlauffläche eine Bewegung des Bremselements in Richtung der Freigabeposition bis zu einer Öffnungsposition bewirkbar ist. In der Öffnungsposition ist es dem Kopf des Verarbeitungselements möglich, in die Rastvertiefung einzurasten. Das Einrasten geschieht dadurch, dass sich das Bremselement wieder in die Bremsposition zurückbewegt, sobald der Kopf des Verarbeitungselements in die Rastvertiefung eindringt.

Gemäß einer Ausführungsform ist die Vorspanneinrichtung so ausgebildet, dass eine erste Kraft benötigt wird, um das Bremselement von der Bremsposition in Richtung der Freigabeposition bis zu einer Öffnungsposition zu bewegen und eine größere zweite Kraft benötigt wird, um das Bremselement von der Öffnungsposition weiter in die Freigabeposition zu bewegen. Die erste Kraft kann durch ein mittels Druckluft transportiertes Verarbeitungselement aufgebracht werden, wenn dieses entlang der Anlauffläche gleitet und somit das Bremselement von der Bremsposition in die Öffnungsposition drückt. Die zweite Kraft ist hingegen so groß, dass sie nicht durch das Verarbeitungselement aufgebracht werden kann. Somit ist sichergestellt, dass das Verarbeitungselement das Bremselement zwar bis zur Öffnungsposition öffnen kann, aber nicht weiter, insbesondere nicht bis zur Freigabeposition.

Hierzu kann die Vorspanneinrichtung zumindest zwei in Reihe geschaltete Federelemente oder Federanordnungen aufweisen, wobei eine Bewegung des Bremselements von der Bremsposition in die Öffnungsposition entgegen einer ersten Rückstellkraft eines ersten Federelements oder einer ersten Federanordnung erfolgt und eine Bewegung des Bremselements von der Öffnungsposition in die Freigabeposition entgegen einer zweiten Rückstellkraft eines zweiten Federelements oder einer zweiten Federanordnung erfolgt, wobei die zweite Rückstellkraft größer ist als die erste Rückstellkraft. Als Federanordnung werden hier mehrere Federelemente bezeichnet, die parallel zueinander geschaltet sind und somit eine gemeinsame Federkonstante aufweisen.

Das erste und/oder das zweite Federelement kann bzw. können als Druckfeder, insbesondere als Spiraldruckfeder ausgebildet sein.

Gemäß einer bevorzugten Ausführungsform ist das Bremselement schwenkbar an einem Gehäuse angeordnet. Alternativ oder zusätzlich kann das Bremselement linear verschiebbar an dem Gehäuse angeordnet sein.

Vorteilhafterweise ist die Schwenkachse des Bremselements in Transportrichtung des Verarbeitungselements vor der Rastvertiefung angeordnet. Dies ermöglicht auf einfache Art und Weise ein sicheres Verschwenken des Bremselements, wenn das Verarbeitungselement entlang der Anlauffläche gleitet.

Die Schwenkachse ist vorteilhafterweise quer, insbesondere senkrecht, zur Haupterstreckungsrichtung des Führungskanals ausgerichtet.

Um das Verarbeitungselement zum Weitertransport freizugeben, kann eine Kraftbeaufschlagungsvorrichtung vorgesehen sein, welche dazu ausgebildet ist, das Bremselement von der Bremsposition in die Freigabeposition zu verstellen. Die Kraft zur Verstellung des Bremselements kann beispielsweise mittels Druckluft erzeugt werden. Hierzu eignen sich Pneumatikzylinder.

Gemäß einer Ausführungsform umfasst die Kraftbeaufschlagungsvorrichtung einen Zylinderkolben, über den die Rückstellkraft zumindest eines Federelements auf das Bremselement übertragbar ist und somit einen Teil der Vorspanneinrichtung darstellt. Folglich erfüllt der Zylinderkolben eine Doppelfunktion: er überträgt die Rückstellkraft, welche das Bremselement in der Bremsposition hält, und er überträgt die Kraft, welche das Bremselement entgegen der Rückstellkraft von der Bremsposition in die Freigabeposition bewegt.

Bevorzugt umfasst der Zylinderkolben einen Zylinderkolbenaufsatz. Der Zylinderkolben und der Zylinderkolbenaufsatz sind vorteilhafterweise mit korrespondierenden Gewinden versehen, sodass der Zylinderkolben und der Zylinderkolbenaufsatz axial miteinander verschraubt werden können. Um die Lage des Zylinderkolbens und des Zylinderkolbenaufsatzes in axialer Richtung zueinander variabel fixieren zu können, kann eine Kontermutter vorgesehen sein, gegen welche beispielsweise der Zylinderkolbenaufsatz auf den Zylinderkolben aufgeschraubt werden kann.

Der Zylinderkolben ist vorzugsweise ein Pneumatikzylinderkolben. Dies hat den Vorteil, dass z.B. ein für die Zufuhr des Verarbeitungselements bereits vorhandenes pneumatisches System eingesetzt werden kann, um den Zylinder zu betreiben.

Gemäß einer weiteren Ausführungsform weist die Kraftbeaufschlagungsvorrichtung ein relativ zu dem Zylinderkolben bewegliches Kraftübertragungselement auf, welches zwischen den Zylinderkolben und das Bremselement geschaltet ist. Die Vorspannkraft wird dann von dem Zylinderkolben über das Kraftübertragungselement auf das Bremselement übertragen. Das erste Federelement kann zwischen dem Kraftübertragungselement und dem Zylinderkolben angeordnet sein. Insbesondere kann das erste Federelement zwischen zwei sich gegenüberliegen Stirnflächen des Kraftübertragungselements und des Zylinderkolbens angeordnet sein. Somit kann das Verarbeitungselement beim Entlanggleiten an der Anlauffläche das Bremselement in Richtung der Öffnungsposition aufdrücken, wodurch das Bremselement das Kraftübertragungselement entgegen der Rückstellkraft des ersten Federelements in eine Öffnungsposition drückt. Da das Kraftübertragungselement beweglich gegenüber dem Zylinderkolben angeordnet ist, bewegt sich der Zylinderkolben dagegen im Wesentlichen nicht, wenn das Bremselement von der Bremsposition in die Öffnungsposition gedrückt wird. Eine Bewegung des Kolbens ist somit nicht notwendig, damit der Kopf des Verarbeitungselements in die Rastvertiefung eingreifen kann.

Das Kraftübertragungselement kann in einer axialen Öffnung des Zylinderkolbenaufsatzes angeordnet sein. Vorzugsweise weist die axiale Öffnung des Zylinderkolbenaufsatzes zwei unterschiedliche Breiten, insbesondere Durchmesser, auf. Das Kraftübertragungselement kann zwei, zu den unterschiedlichen Breiten der axialen Öffnung korrespondierende Breiten, insbesondere Durchmesser, aufweisen. Das erste Federelement kann das Kraftübertragungselement auf dessen breiterer Stirnseite mit einer Kraft beaufschlagen und entlang der axialen Öffnung gegen ein Kopplungselement des Bremselements drücken.

Gemäß noch einer weiteren Ausführungsform ist eine Verarbeitungselementantriebseinrichtung vorgesehen, welche dazu ausgebildet ist, das Verarbeitungselement nach einer Freigabe durch das Bremselement, insbesondere mittels Druckluft, in einer Förderrichtung weiter zu transportieren. Die Verarbeitungselementantriebseinrichtung ist vorzugsweise über ein Steuermodul mit der Kraftbeaufschlagungsvorrichtung verbunden und so gesteuert, dass zu dem Zeitpunkt, an dem das Verarbeitungselement durch das Bremselement freigegeben wird, bereits die nötige Antriebsleistung zum Weitertransport des Verarbeitungselements am Verarbeitungselement anliegt.

Vorteilhafterweise umfasst die Verarbeitungselementantriebseinrichtung zumindest einen Pneumatikleitungsabschnitt, welcher in Transportrichtung des Verarbeitungselements gesehen vor dem Bremselement seitlich in den Führungskanal mündet. So kann das Verarbeitungselement auf einfache Weise mittels Druckluft weitertransportiert werden.

Die Verarbeitungselementantriebseinrichtung kann mehrere Pneumatikleitungsabschnitte aufweisen, welche in Transportrichtung des Verarbeitungselements gesehen vor dem Bremselement seitlich in den Führungskanal münden.

Zumindest eines, insbesondere alle, der Pneumatikleitungsabschnitte können in einem Winkel zwischen 10° und 80° zur Haupterstreckungsrichtung des Führungskanals in den Führungskanal münden. Der Winkel kann insbesondere zwischen 20° und 70° und speziell zwischen 30° und 60° liegen.

Der Führungskanal bzw. der Zuführschlauch kann zumindest eine Ausgleichsöffnung aufweisen, welches eine Fluidverbindung zwischen dem Führungskanal und der Umgebung schafft. Die Ausgleichsöffnung verhindert, dass im Führungskanal bzw. im Zuführschlauch ein Vakuum entsteht.

Nachfolgend wird die Erfindung anhand rein beispielhafter Ausführungsformen unter Bezugnahme auf die beigefügten Zeichnungen beschrieben. Es zeigen:
- Fig. 1: eine Schnittansicht einer erfindungsgemäßen Vorrichtung in einer Bremsposition,
- Fig. 2: eine Detailansicht der Vorrichtung von Fig. 1 in einer Öffnungsposition, und
- Fig. 3: eine Schnittansicht einer zweiten erfindungsgemäßen Vorrichtung mit gekrümmtem Führungskanal.

Die in den Figuren dargestellten Vorrichtungen 10, 10' sind dafür vorgesehen, ein Verarbeitungselement 12, in den vorliegenden Ausführungsbeispielen eine FDS-Schraube, welches mittels eines nicht dargestellten Zuführsystems, in den vorliegenden Ausführungsbeispielen eines mittels Druckluft betriebenen Zuführsystems, einem ebenfalls nicht dargestellten Werkzeug zugeführt wird, abzubremsen und sicher zu fixieren, bis es zum Weitertransport zum Werkzeug freigegeben werden kann. Üblicherweise handelt es sich bei dem Werkzeug um einen Bit eines automatischen Schraubers.

Die Vorrichtung 10, 10' umfasst ein Gehäuse 14, in dem ein Führungskanal 16 ausgeformt ist. Der Führungskanal 16 verbindet einen Eingang 18 und einen Ausgang 20 der Vorrichtung miteinander. Der Eingang 18 ist mit einem das Verarbeitungselement 10 zuführenden Abschnitt einer schlauch- oder rohrförmigen Leitung des Zuführsystems koppelbar. Der Ausgang 20 ist mit einem ein Verarbeitungselement 10 abtransportierenden Abschnitt einer schlauch- oder rohrförmigen Leitung des Zuführsystems koppelbar.

Die Vorrichtung 10, 10' umfasst ferner ein um eine Schwenkachse 22 schwenkbar gelagertes Bremselement 24, welches zum Abbremsen und Halten des zugeführten Verarbeitungselements 12 in einem vordefinierten Abschnitt des Führungskanals 16 teilweise in den Führungskanal 16 einbringbar ist. Die Schwenkachse 22 des Bremselements 24 befindet sich in Transportrichtung A des Verarbeitungselements vor einer Rastvertiefung 28.

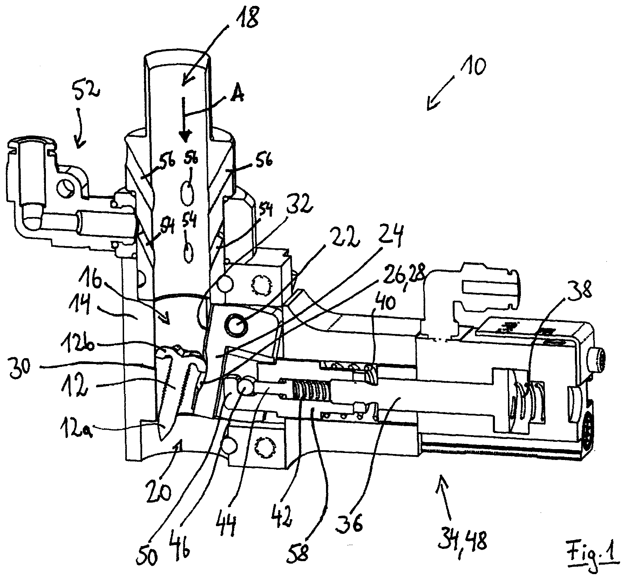

Fig. 1 zeigt das Bremselement 24 in seiner Bremsposition. In dieser Bremsposition ragt das Bremselement 24 teilweise in den Führungskanal 16 hinein und verengt den Führungskanal 16 in der Weise, dass das Verarbeitungselement 12 das Bremselement 24 nicht vollständig passieren kann. Mit anderen Worten versperrt das Bremselement 24 dem Verarbeitungselement 12 den Führungskanal 16 zwischen Eingang 18 und Ausgang 20. Der in den Führungskanal 16 hineinragende und dadurch den Führungskanal 16 verengende Teil des Bremselements 24 weist eine Stirnseite 26 auf, welche dem Führungskanal 16 zugewandt ist und welche insbesondere der Form bzw. dem Verlauf des Führungskanals 16 angepasst ist. Die Stirnseite 26 bildet die Rastvertiefung 28 zum Halten eines Kopfes 12b des Verarbeitungselements 12 aus. Das Verarbeitungselement 12 wird also durch einen Formschluss zwischen dem Kopf 12b des Verarbeitungselements 12 und der Rastvertiefung 28 in der Rastvertiefung 28 gehalten. Zusätzlich kann das Bremselement 24 den Kopf 12b des Verarbeitungselements 12 gegen eine Innenwand 30 des Führungskanals 16 drücken, sodass das Verarbeitungselement 12 zwischen dem Bremselement 24 und der Innenwand 30 des Führungskanals 16 eingeklemmt ist.

Das Bremselement 24 weist auf der Stirnseite 26 ferner eine der Rastvertiefung 28 in einer Transportrichtung A des Verarbeitungselements 12 vorgelagerte Anlauffläche 32 auf. In der in Fig. 1 gezeigten Bremsposition des Bremselements 24 steht die Anlauffläche 32 in einem Winkel zu der Innenwand 30 des Führungskanals 16 in den Führungskanal 16 hinein, sodass sich ein durch die Innenwand 30 des Führungskanals 16 und die Anlauffläche 32 definierter Kanalabschnitt entlang der Anlauffläche 32 kontinuierlich verengt.

Die Vorrichtung 10 umfasst ferner eine Vorspanneinrichtung 34, welche entgegen einer Bewegung des Bremselements 24 aus der Bremsposition in die Freigabeposition wirkt und das Bremselement 24 in die Bremsposition vorspannt. Hierzu weist die Vorspanneinrichtung 34 einen Zylinderkolben 36 mit einem Zylinderkolbenaufsatz 58 auf, welcher mittels zweier parallel geschalteter Federelemente 38, 40 in eine der Bremsposition des Bremselements 24 entsprechende ausgefahrene Stellung gedrückt wird. Der Zylinderkolben 36 überträgt in dieser Position die Vorspannkraft der Federelemente 38, 40 über ein weiteres Federelement 42 auf ein Kraftübertragungselement 44. Dieses Kraftübertragungselement 44 überträgt die Vorspannkraft auf ein Kopplungselement 46 des Bremselements 24.

Anstelle von zwei parallel geschalteten Federelementen 38, 40 kann auch nur ein einziges Federelement vorgesehen sein. Es wäre prinzipiell auch denkbar, mehr als zwei Federelemente zum Vorspannen des Zylinderkolbens 36 vorzusehen.

Der Zylinderkolben 36 ist gleichzeitig Teil einer Kraftbeaufschlagungsvorrichtung 48 welche dazu ausgebildet ist, das Bremselement 24 von der Bremsposition in die Freigabeposition zu verstellen. Im vorliegenden Beispiel ist der Zylinderkolben 36 als Pneumatikzylinderkolben ausgestaltet. Mittels Druckluft kann eine Stellkraft auf den Zylinderkolben 36 aufgebracht werden, durch die der Zylinderkolben 36 zum Verstellen des Bremselements 24 in die Freigabeposition entgegen der Rückstellkraft der Federelemente 38, 40 bewegt wird, in den Figuren nach rechts. Zum Aufbringen der Stellkraft auf das Bremselement 24 ist an dem dem Bremselement 24 zugewandten Ende des Zylinderkolbens 36 bzw. des Zylinderkolbenaufsatzes 58 ein hakenförmiger Abschnitt 50 vorgesehen, welcher das Kopplungselement 46 des Bremselements 24 umgreift. Der hakenförmige Abschnitt 50 umgibt das Kopplungselement 46 an drei Seiten, wobei ein Spiel zwischen den gegenüberliegenden Seiten und dem Kopplungselement 46 vorgesehen ist. Das Kopplungselement 46 ist als Zapfen ausgebildet und weist eine abgerundete Anlagefläche auf, welche mit dem hakenförmigen Abschnitt 50 in Kontakt steht bzw. kommt, wenn der Zylinderkolben 36 das Bremselement 24 aus der Bremsposition in die Freigabeposition zieht.

Der Zylinderkolben 36 ist folglich so konfiguriert, dass er das Bremselement 24 in die Bremsposition drückt, solange keine pneumatische Kraft an dem Zylinderkolben angelegt ist. Sobald das Bremselement 24 in die Freigabeposition verschwenkt werden soll und deshalb eine pneumatische Kraft an dem Zylinderkolben 36 angelegt wird, welche den Zylinderkolben 36 weg von dem Führungskanal 16 drückt, zieht der Zylinderkolben das Bremselement 24 dagegen in die Freigabeposition.

Die Vorrichtung 10 umfasst zudem eine Verarbeitungselementantriebseinrichtung 52, welche dazu ausgebildet ist, das Verarbeitungselement 12 nach einer Freigabe durch das Bremselement 24 mittels Druckluft in einer Transportrichtung A weiter zu transportieren. Die Verarbeitungselementantriebseinrichtung 52 weist zumindest einen Pneumatikleitungsabschnitt 54 auf, welcher vor dem Bremselement 24 seitlich in den Führungskanal 16 mündet. Wie in Fig. 1 zu sehen ist, mündet der Pneumatikleitungsabschnitt 54 unter einem Winkel von ca. 40° zur Hauptachse des Führungskanals 16 bzw. der Transportrichtung A des Verarbeitungselements 12 in den Führungskanal 16. Wie ebenfalls in Fig. 1 zu sehen ist, können mehrere entlang des Umfangs verteilte Pneumatikleitungsabschnitte 54 vorgesehen sein, um eine stärkere und gleichmäßigere Antriebskraft auf das Verarbeitungselement 12 auszuüben. Zudem können auch Ausgleichsöffnungen 56 vorgesehen sein, welche entlang der Hauptachse des Führungskanals 16 versetzt zu den Pneumatikleitungsabschnitten 54 angeordnet sind. Die Ausgleichsöffnungen 56 stellen eine Fluidverbindung zwischen dem Zuführschlauch bzw. dem Führungskanal 16 und einer Umgebung her. Diese Fluidverbindung zur Umgebung sorgt dafür, dass Umgebungsluft in den Zuführschlauch bzw. Führungskanal 16 eindringen kann. Hierdurch wird verhindert, dass im Zuführschlauch bzw. Führungskanal 16 ein Vakuum entsteht.

Im Folgenden wird nun erläutert, wie die Vorrichtung 10 das Verarbeitungselement 12 schonend abbremst, sicher hält und wieder präzise freigibt.

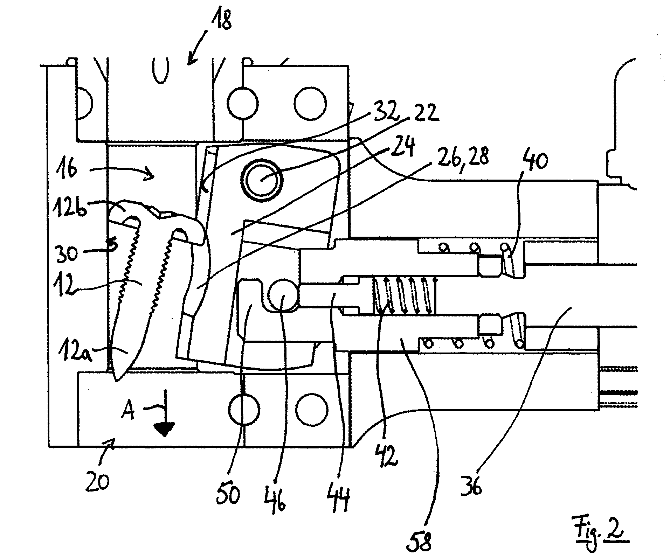

Wird ein Verarbeitungselement 12 durch den Eingang 18 bis zu dem Bremselement 24 transportiert, passiert die Spitze 12a des Verarbeitungselements 12 die Anlauffläche 32 des Bremselements 24, ohne das Bremselement 24 aus seiner Bremsposition herauszubewegen, da das Bremselement 24 den Führungskanal 16 nicht in der Weise verengt, dass die Spitze 12a nicht mehr durch den verengten Führungskanal 16 hindurchpassen würde. Sobald jedoch der Kopf 12b des Verarbeitungselements 12 in den Abschnitt des Führungskanals 16 hineingleitet, der wenn sich das Bremselement 24 in der Bremsposition befindet durch die Anlauffläche 32 verengt wird, kommt der Kopf 12b des Verarbeitungselements 12 mit der Anlauffläche 32 in Kontakt, da die Anlauffläche 32 den Führungskanal 16 in der Weise verengt, dass der Kopf 12b des Verarbeitungselements 12 nicht hindurchpasst. Das Verarbeitungselement 12 drückt beim Entlanggleiten an der Anlauffläche 32 das Bremselement 24 weg, sodass dieses von der Bremsposition aus Fig. 1 in die in Fig. 2 dargestellte Öffnungsposition verschwenkt wird. Die von dem Verarbeitungselement 12 auf das Bremselement 24 aufgebrachte Kraft sorgt dafür, dass das erste Federelement 42 komprimiert wird, indem das Bremselement 24 mit seinem Kopplungselement 46 gegen das Kraftübertragungselement 44 drückt. Das Kraftübertragungselement 44 drückt dann wiederum gegen das erste Federelement 42, wodurch dieses komprimiert wird. Die Rückstellkraft bzw. Federkonstante des ersten Federelements 42 ist dermaßen ausgelegt, dass durch ein Auftreffen und Entlanggleiten des Kopfes 12b des Verarbeitungselements 12 an der Anlauffläche 32 eine Bewegung des Bremselements 24 in Richtung der Freigabeposition bis zu einer Öffnungsposition bewirkbar ist.

Dagegen bewegt sich der Zylinderkolben 36 nicht, wenn das Bremselement 24 von der Bremsposition in die Öffnungsposition bewegt wird, da die zweiten Federelemente 38, 40 als Federanordnung gemeinsam eine höhere Federsteifigkeit aufweisen, als das erste Federelement 42.

Sobald der Kopf 12b des Verarbeitungselements 12 das Ende der Anlauffläche 32 erreicht hat, siehe Fig. 2, rastet der Kopf 12b in die Rastvertiefung 28 ein. Hierdurch nimmt die von dem Kopf 12b auf das Bremselement 24 übertragene Öffnungskraft ab und das Bremselement 24 kann in die Bremsposition zurückschwenken. Das erste Federelement 42 kann sich hierdurch zumindest teilweise wieder entspannen. Der Kopf 12b des Verarbeitungselements 12 und damit das Verarbeitungselement 12 wird von dem Bremselement 24 nun formschlüssig gehalten, d.h. der Kopf 12b greift teilweise in die Rastvertiefung 28 ein. Da die Rastvertiefung 28 eine Bewegung des Kopfes 12b des Verarbeitungselements 12 in beide Richtungen des Führungskanals 16 verhindert, kann sich das Verarbeitungselement 12 weder in Richtung des Ausgangs 20, noch in Richtung des Eingangs 18 ungewollt lösen. Somit ist das Verarbeitungselement 12 in dem Bereich der Rastvertiefung 28 durch das Bremselement 24 fixiert, auch wenn das Verarbeitungselement 12 durch die Schwerkraft oder eine auf das Verarbeitungselement 12 wirkende Fliehkraft in Richtung des Eingangs 18 beschleunigt wird, zum Beispiel bei einem Arbeiten über Kopf.

Die Kraftbeaufschlagungsvorrichtung 48 dient dazu, die Fixierung des Verarbeitungselements 12 wieder zu lösen. Hierzu wird der Zylinderkolben 36 der Kraftbeaufschlagungsvorrichtung 48 mittels Druckluft entgegen der Rückstellkraft der Federelemente 38, 40 aus der der Bremsposition des Bremselements 24 entsprechenden Stellung in eine der Freigabeposition des Bremselements 24 entsprechende Stellung bewegt. Dabei zieht der hakenförmige Abschnitt 50 des Zylinderkolbens 36 an dem Kopplungselement 46 und damit das Bremselement 24 aus der Bremsposition in die nicht dargestellte Freigabeposition, in welcher das Bremselement den Führungskanal 16 freigibt. Wenn der Führungskanal 16 freigegeben ist, kann das Verarbeitungselement 12 samt Kopf 12b das Bremselement passieren und zum Ausgang 20 des Führungskanals 16 gelangen.

Um einen Weitertransport, insbesondere auch bei einem Arbeiten über Kopf zu gewährleisten, wird von der Verarbeitungselementantriebseinrichtung 52 beim Freigeben des Bremselements 24 eine pneumatische Antriebskraft bereitgestellt. Es wird hierzu Druckluft durch die Pneumatikleitungsabschnitte 54 eingeleitet, welche dafür sorgt, dass das Verarbeitungselement 12 unabhängig von der Lage der Vorrichtung im Raum und somit unabhängig von der Wirkrichtung der Schwerkraft stets in Richtung des Ausgangs 20 weitertransportiert wird.

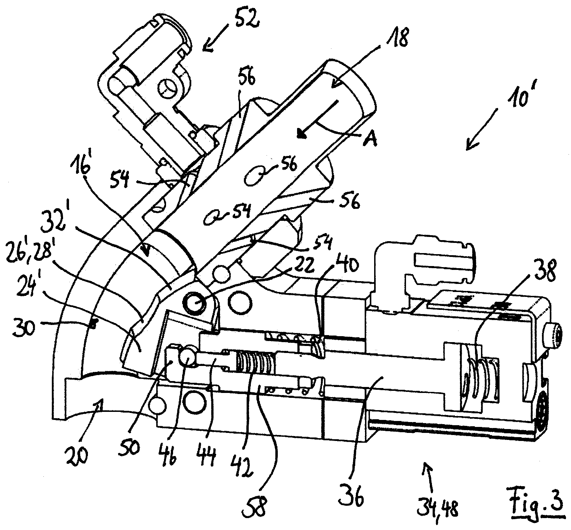

Fig. 3 zeigt eine weitere Ausführungsform der Erfindung. Im Gegensatz zu der in Fig. 1 und Fig. 2 gezeigten Ausführungsform ist anstelle eines geraden Führungskanals 16 ein gekrümmter Führungskanal 16' vorgesehen. Die Stirnseite 26' des Bremselements 24' ist an die gekrümmte Form des Führungskanals 16' angepasst, sodass der Durchmesser des Führungskanals 16' entlang der Bewegungsrichtung A des Verarbeitungselements im Wesentlichen konstant bleibt, wenn sich das Bremselement in der Freigabeposition befindet. Eine solche Krümmung des Führungskanals 16' und der Stirnseite 26' des Bremselements 24' kann beispielsweise 45° oder 90° aufweisen.

Im vorliegenden Ausführungsbeispiel wird die Vorrichtung dazu verwendet, FDS-Schrauben, d.h. fließlochformende Schrauben, zu bremsen, zu fixieren und freizugeben. Die Vorrichtung kann aber selbstverständlich auch für jegliche andere Verarbeitungselemente verwendet werden, die einen Kopf, d.h. einen seitlichen Vorsprung, aufweisen und sich somit dazu eignen, mit der Rastvertiefung einen Formschluss einzugehen.

### Bezugszeichenliste

- 10: Vorrichtung
- 12: Verarbeitungselement
- 12a: Spitze
- 12b: Kopf
- 14: Gehäuse
- 16: Führungskanal
- 18: Eingang
- 20: Ausgang
- 22: Schwenkachse
- 24: Bremselement
- 26: Stirnseite
- 28: Rastvertiefung
- 30: Innenwand
- 32: Anlauffläche
- 34: Vorspanneinrichtung
- 36: Zylinderkolben
- 38: Federelement
- 40: zweite Federelement
- 42: erste Federelement
- 44: Kraftübertragungselement
- 46: Kopplungselement
- 48: Kraftbeaufschlagungsvorrichtung
- 50: hakenförmiger Abschnitt
- 52: Verarbeitungselementantriebseinrichtung
- 54: Pneumatikleitungsabschnitt
- 56: Ausgleichsöffnung
- 58: Zylinderkolbenaufsatz
- A: Transportrichtung des Verarbeitungselements

## Patentansprüche

1. Vorrichtung (10) zum Abbremsen und Halten eines einen Kopf (12b) aufweisenden Verarbeitungselements (12), welches einem Werkzeug automatisch zugeführt wird, umfassend
einen Führungskanal (16) für das Verarbeitungselement (12) und
ein zwischen einer Bremsposition und einer Freigabeposition beweglich gelagertes Bremselement (24), welches zum Abbremsen und Halten des zugeführten Verarbeitungselements (12) zumindest teilweise in den Führungskanal (16) einbringbar ist,
**dadurch gekennzeichnet, dass**
ein in der Bremsposition in den Führungskanal (16) hineinragender und den Führungskanal (16) dadurch verengender Teil des Bremselements (24) eine dem Führungskanal (16) zugewandte Stirnseite (26) aufweist,
die eine Rastvertiefung (28) zum Halten des Kopfes (12b) des Verarbeitungselements (12) ausbildet.

2. Vorrichtung (10) nach Anspruch 1,
**dadurch gekennzeichnet, dass**
die Vorrichtung (10) derart ausgebildet ist, dass sie das Verarbeitungselement (12) ausschließlich am Kopf (12b) bremst.

3. Vorrichtung (10) nach Anspruch 1 oder 2,
**dadurch gekennzeichnet, dass**
das Bremselement (24) derart ausgebildet und angeordnet ist, dass es den Kopf (12b) eines gehaltenen Verarbeitungselements (12) in der Bremsposition mit einer quer zu einer Haupterstreckungsrichtung des Führungskanals (16) gerichteten Klemmkraft beaufschlagt.

4. Vorrichtung (10) nach zumindest einem der Ansprüche 1 bis 3,
**dadurch gekennzeichnet, dass**
eine Vorspanneinrichtung (34) vorgesehen ist, welche das Bremselement (24) gegen eine Bewegung in die Freigabeposition vorspannt.

5. Vorrichtung (10) nach Anspruch 4,
**dadurch gekennzeichnet, dass**
das Bremselement (24) eine der Rastvertiefung (28) in einer Transportrichtung (A) des Verarbeitungselements (12) vorgelagerte Anlauffläche (32) aufweist, durch die der Führungskanal (16), wenn sich das Bremselement (24) in der Bremsposition befindet, verengt wird,
wobei die auf das Bremselement (24) wirkende Vorspannkraft so dimensioniert ist, dass durch ein Auftreffen auf und Entlanggleiten des Kopfes (12b) des Verarbeitungselements (12) an der Anlauffläche (32) eine Bewegung des Bremselements (24) in Richtung der Freigabeposition bis zu einer Öffnungsposition bewirkbar ist.

6. Vorrichtung (10) nach Anspruch 4 oder 5,
**dadurch gekennzeichnet, dass**
die Vorspanneinrichtung (34) so ausgebildet ist, dass eine erste Kraft benötigt wird, um das Bremselement (24) von der Bremsposition in Richtung der Freigabeposition bis zu einer Öffnungsposition zu bewegen, und dass eine größere zweite Kraft benötigt wird, um das Bremselement (24) von der Öffnungsposition weiter in die Freigabeposition zu bewegen.

7. Vorrichtung (10) nach zumindest einem der Ansprüche 4 bis 6,
**dadurch gekennzeichnet, dass**
die Vorspanneinrichtung (34) zumindest zwei in Reihe geschaltete Federelemente (40, 42) aufweist, wobei eine Bewegung des Bremselements (24) von der Bremsposition in die Öffnungsposition entgegen einer ersten Rückstellkraft eines ersten Federelements (42) oder einer ersten Federanordnung erfolgt und eine Bewegung des Bremselements (24) von der Öffnungsposition in die Freigabeposition entgegen einer zweiten Rückstellkraft eines zweiten Federelements oder einer zweiten Federanordnung (38, 40) erfolgt, wobei die zweite Rückstellkraft größer ist als die erste Rückstellkraft.

8. Vorrichtung (10) nach zumindest einem der vorstehenden Ansprüche,
**dadurch gekennzeichnet, dass**
das Bremselement (24) schwenkbar an einem Gehäuse (14) angeordnet ist, insbesondere wobei die Schwenkachse (22) des Bremselements (24) in einer Transportrichtung (A) des Verarbeitungselements (12) gesehen vor der Rastvertiefung (28) angeordnet ist.

9. Vorrichtung (10) nach zumindest einem der vorstehenden Ansprüche,
**dadurch gekennzeichnet, dass**
eine Kraftbeaufschlagungsvorrichtung (48) vorgesehen ist, welche dazu ausgebildet ist, das Bremselement (24) von der Bremsposition in die Freigabeposition zu verstellen, insbesondere wobei die Kraft zur Verstellung des Bremselements (24) mittels Druckluft erzeugt wird.

10. Vorrichtung (10) nach Anspruch 9,
**dadurch gekennzeichnet, dass**
die Kraftbeaufschlagungsvorrichtung (48) einen Zylinderkolben (36), insbesondere einen Pneumatikzylinderkolben, umfasst, über den die Rückstellkraft zumindest eines Federelements (38, 40) auf das Bremselement (24) übertragbar ist.

11. Vorrichtung (10) nach Anspruch 10,
**dadurch gekennzeichnet, dass**
ein relativ zu dem Zylinderkolben (36) bewegliches Kraftübertragungselement (44) vorgesehen ist, welches zwischen den Zylinderkolben (36) und das Bremselement (24) geschaltet ist und mit einer Rückstellkraft eines ersten Federelements (42) beaufschlagt ist, wobei sich das erste Federelement (42) an dem Zylinderkolben (36) abstützt.

12. Vorrichtung (10) nach zumindest einem der vorstehenden Ansprüche,
**dadurch gekennzeichnet, dass**
eine Verarbeitungselementantriebseinrichtung (52) vorgesehen ist, welche dazu ausgebildet ist, das Verarbeitungselement (12) nach einer Freigabe durch das Bremselement (24), insbesondere mittels Druckluft, in einer Förderrichtung weiter zu transportieren.

13. Vorrichtung (10) nach Anspruch 12,
**dadurch gekennzeichnet, dass**
die Verarbeitungselementantriebseinrichtung (52) zumindest einen Pneumatikleitungsabschnitt, insbesondere mehrere Pneumatikleitungsabschnitte (54, 56), umfasst, welcher bzw. welche in der Haupterstreckungsrichtung des Führungskanals (16) vor dem Bremselement (24) seitlich in den Führungskanal (16) mündet bzw. münden.

14. Verwendung einer Vorrichtung (10) gemäß einem der vorherigen Ansprüche zum Bremsen, Fixieren und Freigeben einer Schraube (12), insbesondere einer FDS-Schraube.

15. Verwendung einer Vorrichtung (10) gemäß Anspruch 14,
**dadurch gekennzeichnet, dass**
ein Bremsen der Schraube, insbesondere FDS-Schraube, durch eine Bremskraftübertragung von der Vorrichtung (10) ausschließlich auf den Kopf (12b) der Schraube (12) bewirkt wird.

## Claims

1. An apparatus (10) for braking and holding a processing element (12) which has a head (12b) and which is automatically supplied to a tool, said apparatus (10) comprising
a guide channel (16) for the processing element (12); and
a braking element (24) which is movably supported between a braking position and a release position and which can be at least partly introduced into the guide channel (16) to brake and hold the processing element (12) supplied,
**characterized in that**
a part of the braking element (24) which projects into the guide channel (16) in the braking position and thereby narrows the guide channel (16) has an end face (26) which faces the guide channel (16) and which forms a latch recess (28) for holding the head (12b) of the processing element (12).

2. An apparatus (10) in accordance with claim 1,
**characterized in that**
the apparatus (10) is configured such that it brakes the processing element (12) solely at the head (12b).

3. An apparatus (10) in accordance with claim 1 or claim 2,
**characterized in that**
the braking element (24) is configured and arranged such that it applies a clamping force directed transversely to a main direction of extent of the guide channel (16) to the head (12b) of a held processing element (12) in the braking position.

4. An apparatus (10) in accordance with at least one of the claims 1 to 3,
**characterized in that**
a preloading device (34) is provided which preloads the braking element (24) against a movement into the release position.

5. An apparatus (10) in accordance with claim 4,
**characterized in that**
the braking element (24) has a run-on surface (32) which is arranged upstream of the latch recess (28) in a transport direction (A) of the processing element (12) and by which the guide channel (16) is narrowed when the braking element (24) is in the braking position,
with the preload force acting on the braking element (24) being dimensioned such that a movement of the braking element (24) in the direction of the release position up to an opening position can be brought about by an impact and a sliding along of the head (12b) of the processing element (12) at the run-on surface (32).

6. An apparatus (10) in accordance with claim 4 or claim 5,
**characterized in that**
the preloading device (34) is configured such that a first force is required to move the braking element (24) from the braking position in the direction of the release position up to an opening position and such that a larger second force is required to move the braking element (24) from the opening position further into the release position.

7. An apparatus in accordance (10) with at least one of the claims 4 to 6,
**characterized in that**
the preloading device (34) has at least two spring elements (40, 42) connected in series, with a movement of the braking element (24) from the braking position into the opening position taking place against a first restoring force of a first spring element (42) or of a first spring arrangement and a movement of the braking element (24) from the opening position into the release position taking place against a second restoring force of a second spring element or of a second spring arrangement (38, 40), and with the second restoring force being larger than the first restoring force.

8. An apparatus (10) in accordance with at least one of the preceding claims,
**characterized in that**
the braking element (24) is pivotably arranged at a housing (14), in particular with the pivot axis (22) of the braking element (24) being arranged in front of the latch recess (28) viewed in a transport direction (A) of the processing element (12).

9. An apparatus (10) in accordance with at least one of the preceding claims,
**characterized in that**
a force application apparatus (48) is provided which is configured to adjust the braking element (24) from the braking position into the release position, in particular with the force for adjusting the braking element (24) being generated by means of compressed air.

10. An apparatus (10) in accordance with claim 9,
**characterized in that**
the force application apparatus (48) comprises a cylinder piston (36), in particular a pneumatic cylinder piston, via which the restoring force of at least one spring element (38, 40) can be transmitted to the braking element (24).

11. An apparatus (10) in accordance with claim 10,
**characterized in that**
a force transmission element (44) movable relative to the cylinder piston (36) is provided, said force transmission element (44) being connected between the cylinder piston (36) and the braking element (24) and being acted on by a restoring force of a first spring element (42), with the first spring element (42) being supported at the cylinder piston (36).

12. An apparatus (10) in accordance with at least one of the preceding claims,
**characterized in that**
a processing element drive device (52) is provided which is configured to further transport the processing element (12) in a conveying direction, in particular by means of compressed air, after a release by the braking element (24).

13. An apparatus (10) in accordance with claim 12,
**characterized in that**
the processing element drive device (52) comprises at least one pneumatic line section, in particular a plurality of pneumatic line sections (54, 56), which opens/open laterally into the guide channel (16) in front of the braking element (24) in the main direction of extent of the guide channel (16).

14. Use of an apparatus (10) in accordance with any one of the preceding claims for braking, fixing and releasing a screw (12), in particular an FDS screw.

15. Use of an apparatus (10) in accordance with claim 14,
**characterized in that**
a braking of the screw, in particular of the FDS screw, is brought about by a braking force transmission from the apparatus (10) solely to the head (12b) of the screw (12).

## Revendications

1. Dispositif (10) pour freiner et maintenir un élément à poser (12) présentant une tête (12b) et amené automatiquement à un outil, comprenant un canal de guidage (16) pour l'élément à poser (12) et
un élément de freinage (24) logé de manière mobile entre une position de freinage et une position de libération, qui peut être introduit au moins partiellement dans le canal de guidage (16), afin de freiner et maintenir l'élément à poser (12) amené,
**caractérisé en ce que**
une partie de l'élément de freinage (24) qui, dans la position de freinage, fait saillie dans le canal de guidage (16) et rétrécit ainsi le canal de guidage (16), présente une face frontale (26) qui est tournée vers le canal de guidage (16) et qui forme un renfoncement d'enclenchement (28) pour maintenir la tête (12b) de l'élément à poser (12).

2. Dispositif (10) selon la revendication 1,
**caractérisé en ce que**
le dispositif (10) est réalisé de manière à freiner l'élément à poser (12) exclusivement au niveau de la tête (12b).

3. Dispositif (10) selon la revendication 1 ou 2,
**caractérisé en ce que**
l'élément de freinage (24) est réalisé et disposé de manière à solliciter la tête (12b) d'un élément à poser maintenu (12), dans la position de freinage, avec une force de serrage orientée transversalement à une direction d'extension principale du canal de guidage (16).

4. Dispositif (10) selon l'une au moins des revendications 1 à 3,
**caractérisé en ce que**
il est prévu un organe de précontrainte (34) qui précontraint l'élément de freinage (24) à l'encontre d'un mouvement vers la position de libération.

5. Dispositif (10) selon la revendication 4,
**caractérisé en ce que**
l'élément de freinage (24) présente une surface de butée (32) située en amont du renfoncement d'enclenchement (28) dans une direction de transport (A) de l'élément à poser (12), par laquelle le canal de guidage (16) est rétréci lorsque l'élément de freinage (24) se trouve dans la position de freinage,
la force de précontrainte agissant sur l'élément de freinage (24) étant dimensionnée de telle sorte qu'un mouvement de l'élément de freinage (24) en direction de la position de libération jusque dans une position d'ouverture peut être provoqué par un impact et un glissement de la tête (12b) de l'élément à poser (12) sur la surface de butée (32).

6. Dispositif (10) selon la revendication 4 ou 5,
**caractérisé en ce que**
l'organe de précontrainte (34) est réalisé de telle sorte qu'une première force est nécessaire pour déplacer l'élément de freinage (24) de la position de freinage en direction de la position de libération jusque dans une position d'ouverture, et qu'une deuxième force plus importante est nécessaire pour continuer à déplacer l'élément de freinage (24) de la position d'ouverture jusque dans la position de libération.

7. Dispositif (10) selon l'une au moins des revendications 4 à 6,
**caractérisé en ce que**
l'organe de précontrainte (34) comprend au moins deux éléments de ressort (40, 42) montés en série, un mouvement de l'élément de freinage (24) de la position de freinage jusque dans la position d'ouverture s'effectuant à l'encontre d'une première force de rappel d'un premier élément de ressort (42) ou d'un premier ensemble de ressort, et un mouvement de l'élément de freinage (24) de la position d'ouverture jusque dans la position de libération s'effectuant à l'encontre d'une deuxième force de rappel d'un deuxième élément de ressort ou d'un deuxième ensemble de ressort (38, 40), la deuxième force de rappel étant supérieure à la première force de rappel.

8. Dispositif (10) selon l'une au moins des revendications précédentes,
**caractérisé en ce que**
l'élément de freinage (24) est disposé sur un boîtier (14) de manière à pouvoir pivoter, en particulier l'axe de pivotement (22) de l'élément de freinage (24) étant disposé en amont du renfoncement d'enclenchement (28), vu dans une direction de transport (A) de l'élément à poser (12).

9. Dispositif (10) selon l'une au moins des revendications précédentes,
**caractérisé en ce que**
il est prévu un dispositif d'application de force (48) qui est réalisé pour déplacer l'élément de freinage (24) de la position de freinage jusque dans la position de libération, en particulier la force pour le déplacement de l'élément de freinage (24) étant générée au moyen d'air comprimé.

10. Dispositif (10) selon la revendication 9,
**caractérisé en ce que**
le dispositif d'application de force (48) comprend un piston de cylindre (36), en particulier un piston de cylindre pneumatique, par l'intermédiaire duquel la force de rappel d'au moins un élément de ressort (38, 40) peut être transmise à l'élément de freinage (24).

11. Dispositif (10) selon la revendication 10,
**caractérisé en ce que**
il est prévu un élément de transmission de force (44) mobile par rapport au piston de cylindre (36), élément qui est monté entre le piston de cylindre (36) et l'élément de freinage (24) et qui est sollicité avec une force de rappel d'un premier élément de ressort (42), le premier élément de ressort (42) s'appuyant contre le piston de cylindre (36).

12. Dispositif (10) selon l'une au moins des revendications précédentes,
**caractérisé en ce que**
il est prévu un dispositif d'entraînement (52) de l'élément à poser, qui est réalisé pour continuer à transporter l'élément à poser (12) dans une direction de transport après une libération par l'élément de freinage (24), en particulier au moyen d'air comprimé.

13. Dispositif (10) selon la revendication 12,
**caractérisé en ce que**
le dispositif d'entraînement (52) de l'élément à poser comprend au moins un tronçon de conduite pneumatique, en particulier plusieurs tronçons de conduite pneumatique (54, 56), qui débouche(nt) latéralement dans le canal de guidage (16) en amont de l'élément de freinage (24) dans la direction d'extension principale du canal de guidage (16).

14. Utilisation d'un dispositif (10) selon l'une des revendications précédentes pour freiner, fixer et libérer une vis (12), en particulier une vis fluo-perceuse (FDS).

15. Utilisation d'un dispositif (10) selon la revendication 14,
**caractérisée en ce qu'**un freinage de la vis, en particulier de la vis fluo-perceuse (FDS), est effectué par une transmission de la force de freinage du dispositif (10) exclusivement à la tête (12b) de la vis (12).
